## Europäisches Patentamt

## European Patent Office

## Office européen des brevets

(11) Veröffentlichungsnummer: **0 259 293**
**A2**

(12) # EUROPÄISCHE PATENTANMELDUNG

(21) Anmeldenummer: 87890064.6

(22) Anmeldetag: 02.04.87

(51) Int. Cl.⁴: **A 01 K 1/01**

(30) Priorität: **02.04.86 AT 863/86**

(43) Veröffentlichungstag der Anmeldung:
**09.03.88 Patentblatt 88/10**

(84) Benannte Vertragsstaaten:
**AT BE CH DE ES FR GB GR IT LI NL SE**

(71) Anmelder: **Lassmann, Jörn**
**Schmelzgasse 2/137**
**A-1020 Wien (AT)**

(72) Erfinder: **Lassmann, Jörn**
**Schmelzgasse 2/137**
**A-1020 Wien (AT)**

(54) **Toilette für Haustiere.**

㉗ Die Erfindung betrifft eine Vorrichtung zur Aufnahme und Zischenlagerung von Heimtierexkrementen, insbesonders derer von Katzen mit dem Zweck,das permanente Ausströmen von Faulgasen zu verhindern und bei Berücksichtigung des Scharrinstinktes einen geringstmöglichen Streuverbrauch zu erzielen, bestehend aus einem Auffangbehälter mit Bereichen zur getrennten Lagerung von Kot und Flüssigkeit, einem Gehäuse mit Einfüllöffnung, sowie einem Verschluß mit Griff und schaufelförmigem Fortsatz, einem ,im Gehäuse vertieft angeornetem, mit zentralem Streubehälter versehenem, freitragendem konischen Sieb als Auftrittsfläche und einem mit Abstand unter Sieb und Streubehälter liegendem, trichterförmigem Teil des Gehäuses mit Austrittsöffnung der durch Eintauchen in die Auffangbehälterflüssigkeit einen Siphon bildet, sowie eine Vorrichtung im Gehäuse die ermöglicht, daß Faulgase ausschließlich durch einen Gasfilter austreten.

FIG. 11

EP 0 259 293 A2

**Beschreibung**

Toilette für ortsgebundene Tiere, insbesonders tierverhaltensbezogenes Katzenörtchen

Die Erfindung betrifft eine Vorrichtung zur Aufnahme, geruchsarmen Zwischenlagerung und hygienischen Entsorgung von Exkrementen ortsgebundener Tiere, insbesonders derer von Katzen. Vorliegende Erfindung betrifft ein System von Bauteilen, die dem jeweiligen Tierverhalten und den Forderungen des Tierhalters entsprechend zusammengesetzt werden.Daraus resultieren Modelltypen unterschiedlichen Bedienungsaufwands und großen Geruchskomforts bei geringem bis Nullverbrauch an Einstreu.

Bis dato wurden zur Beseitigung von Kleintierexkrementen entweder mit einem WC integrierte Vorrichtungen (US 3,949.429, US4,181.096, US 4,262.634, US4,437.430) erfunden oder freistehend geschlossene (US 4,029,048) und freistehend offene Behälter. Letzterer Kategorie kann die vorliegende Erfindung zugeordnet werden.

DE 3,243.697 A1 betrifft zwei gestapelte Behälter, wobei die gebrauchte Einstreu durch einen Schieber aus dem oberen Container zur Zwischenlagerung abgestreift und dieser unmittelbar neu gefüllt werden kann. US 4,030448 betrifft einen Behälter mit einschiebbarem Boden und Ausgußtülle, die durch Kippen des Behälters benützt weden kann. Bei DE 2,754.620 C2 kommt Einstreu in Verbindung mit einem Wegwefeinsatz zur Verwendung, während bei US 4,308.825 der Einsatz ein wiederverwendbares Netz ist, welches auf porösem Material, wie Zeitungspapier aufliegt und dieses von der Einstreu trennt. Bei beiden Lösungen saugt das, am Boden aufliegende Material den Urin auf, kann ihn jedoch nach Sättigung wieder an die Einstreu abgeben.

US 2,971.493 betrifft einen Einsatz mit Siebboden, der in einen tieferen Behälter eingepasst ist. Das Sieb hält die Einstreu zurück, während der tiefere Behälter den Urin aufnimmt.

Bei US 3,332.397 wird ein Behälter durch eine Schulter, auf der ein Gitter und darauf ein Drahtnetz aufliegen in abgewandelter Form wie zuvor in zwei Bereiche aufgeteilt. Urin, der vom, im oberen Teil liegenden, Streu nicht schon absorbiert wurde, wird im Bodenbereich von Chemikalien neutralisiert, wobei Gase durch Löcher im Auffangbehälter bzw. durch das Netz aufsteigen können. US 3,752.120 betrifft ein System, bei dem der urinhaltige Sand vom Kot ausgesiebt, der Einsatz mit grobem Gitterboden nach Entleering in den freien Behälter eingelegt und aus dem zweiten Behälter wieder mit demselben Sand aufgefüllt wird. Eine ähnliche Lösung, abgewandelt durch eine Streuabschirmung bietet DE 3,028.579 A1 an. DE 3,328.160 A1 betrifft eine Toilette , deren trichterförmiger Bodenteil sich in einen, mit Schieber versehen, herausziehbaren Behälter öffnet.

Bei US 4,487.163 wird eine Folie in einen Behälter eingelegt und mit absorbierendem Material bedeckt. Darauf eine Wegwerf-Drainagebox aus Karton, in die Streu eingefüllt wird.

Es ist ersichtlich, daß bei Verwendung flüssigkeitsaufnehmender Stoffe im herkömmlichen Sinn deren Nässung nicht zu vermeiden ist. und somit umweltbelastender Abfall anfällt.

Aufgabe meiner Erfindung ist es, Instinkt und Wohlbefinden des Tieres zu berücksichtigen ( Scharren, trockenes Streu, frische Luft, Sauberkeit ) und gleichzeitig Geruchsbelästigung infolge Tränkung der Streu durch Urin zu minimieren bzw. zu vermeiden. Eine Gemeinsamkeit mehrerer Erfindungen ist das Übereinanderlegen von Siebeinsätzen wie schlaffe Netze oder ebene Gitter zur Aufnahme, bzw. zum Aussieben von Streu, welches sich über die ganze Fläche ausbreitet. Um die Verteilung der Einstreu beim Scharren zu vermindern ordne ich einen Streubehälter zentral in einer inneren Mulde an, die wiederum in einer äußeren Mulde eingelassen ist. Durch diese Anordnung bleibt der Großteil der Einstreu beim Scharren in der inneren Mulde und die Katze vermag nur eine geringe Schicht Streu zu nässen. Im wesentlichen rinnt der Urin direkt durch das Sieb ab. Kot wird vom Tierhalter durch eine Öffnung im äußeren Muldenboden, bzw. im Gehäuse in den Auffangbehälter abgestreift. Da die festen und flüssigen Fäkalien bereits auf der Absetzfläche getrennt werden, ergibt sich auch deren getrennte Lagerung. Dies wird durch die Gliederung des Auffangbeckens in einen tiefen Bereich für den Urin und einen oder mehrere erhöhte plateauartige Zonen für Kot erzielt. ferner kann ein Ziel der Erfindung sein, das Aufsteigen von Gasen aus dem Auffangbehälter zu verhindern, ohne einen Schieber o.ä. zu betätigen. Während die als Feinsiebböden ausgebildeten Muldenböden den Zweck haben, Absetzflächen zu bieten, bei der die Pfoten des Tieres nicht durch den ablaufenden Urin benetzt werden, leitet eine darunter liegende Geruchsabdeckung wie bei einer Duschtasse die Flüssigkeit in den tieferen Teil des Auffangbeckens ab, wobei die untere Öffnung der Geruchsabdeckung durch Eintauchen in die Bodenflüssigkeit im Auffangbecken einen Siphon bildet. Erfindungsgemäß ist der Hohlraum unter der Geruchsabdeckung durch die Wände des Auffangbeckens und einen Geruchsfilter geschlossen, bzw. durch ein am Boden in voller Kantenlänge aufstehendes Gehäuse mit Austrittsöffnungen im oberen Bereich und vorgelagertem Geruchsfilter.

Bei Verwendung eines inneren Muldenbodens mit zentralem Streubehälter verengt sich die trichterförmige Geruchsabdeckung zu einer Trichterspitze.

In einer Variante wird der Streubehälter weggelassen und statt dessen weist der innere Muldenboden eine oder mehrere Öffnungen auf, durch die der Kot in den darunterliegenden Auffangbehälter fällt. In diesem Fall ist der Trichter lediglich zu einer Taille verengt und erweitert sich nach unten zu einer Glocke, an der Urin haftend abrinnt und die den inselförmigen Kotbereich überspannt. Da trockener Kot geruchsarm ist, kann auf eine zusätzliche Fallklappenabdeckung in der Durchlaßöffnung verzichtet werden. Die Neutralisierung der, vom Urin aufsteigenden Gase ist durch den Geruchsfilter gewährleistet.

Beschreibung

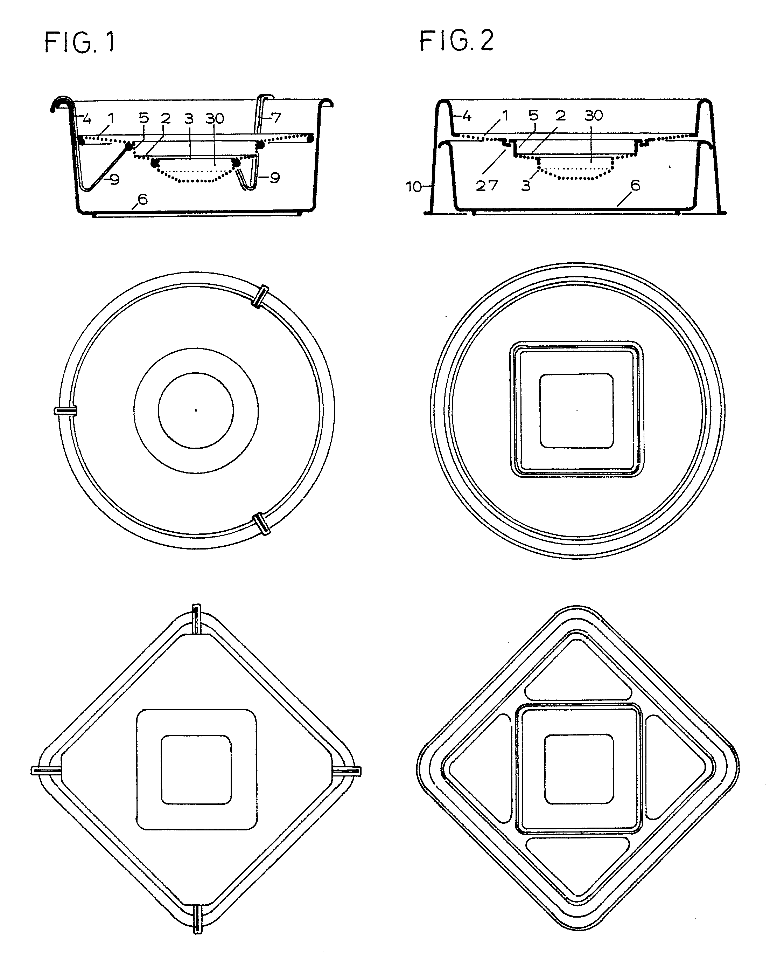

Kern der Erfindung ist ein, zwei konzentrische Mulden bildender Siebbodeneinsatz. Die äußere Siebzone (Muldenboden 1) bietet dem Tier ausreichend Raum, die Toilette zu betreten und an einem scheinbar selbst gewählten Platz den Urin abzusetzen. Innerhalb des Muldenbodens 1 ist ein, durch eine Randstufe vertieftes, inneres Siebelement ( Muldenboden 2 ) angeordnet, in dem das Tier vorzugsweise Hockstellung einnimmt. Im Zentrum von Muldenboden 2 ist eine flache perforierte Schale (3) eingelassen, die mit Einstreu (30) gefüllt wird. Durch das Scharren wird der innere Siebboden teilweise mit Streu bedeckt, wobei der reif artige Rand (5) diesen Vorgang einschränkt. Durch das Innengefälle der Siebzonen 1 und 2 ist die Einstreu wieder leicht in die Streuschale zu rütteln. In der inneren Mulde hockend, spritzt die Katze meist durch Siebzone 2, während der Kot, gewöhnlich beim zweiten Gang, nach dem Scharren, bei stärker gekrümmtem Rücken, im Bereich der Streuschale (3) abgesetzt wird. Abschließend kann ein Teil der ausgescharrten Einstreu genetzt werden, der Anteil ist jedoch volumsmäßig gering. Daher beginnt auch die Geruchsentwicklung erst nach mehrmaliger Benützung. Bei den Ausführungsvarianten nach Fig. 1 und 2 muß der Kot extern entfernt werden.

In Fig.1 ( Schnitt, zwei Draufsichten einer runden und einer Variante mit quadratisch, abgerundeten Bauteilen ) ist ein handelsübliches Auffangbecken (4) mit flachem Boden und konischer Wand dargestellt, in welches Siebbodeneinsatz 1 eingehängt ist. Dieser ist mit mindestens drei Füßen (9) zum Abstellen und Drahtoügeln (7) versehen, mittels derer der Siebbodeneinsatz 1 am Rand des Auffangbehälters abgehängt ist.

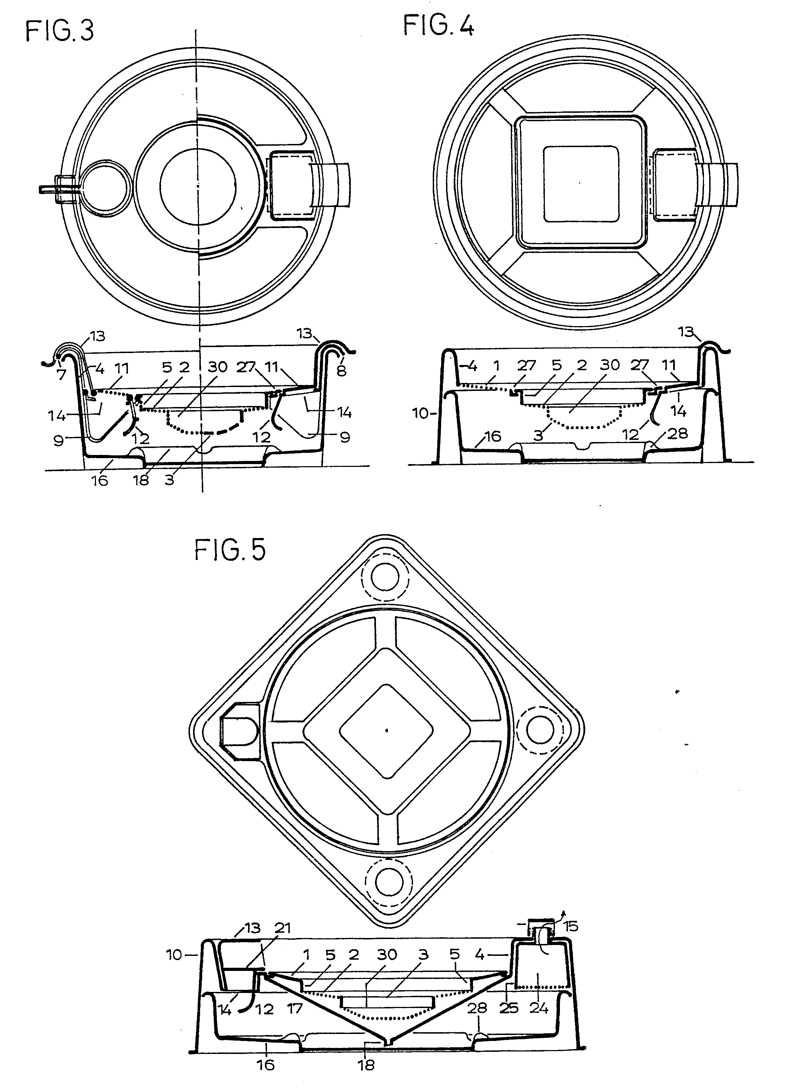

In einer Ausführung ( Fig.3 ),ist die äußere Siebzone (1) mit einer hochgezogenen Wand (8) mit Randwulst versehen und in den konischen Auffangbehälter (6) eingehängt.

Das Feinsieb der Siebböden, Streuschale (3) und Filterbehälter (25) ist aus Draht- oder Kunstfasergeflecht oder aus gepreßtem Kunststoff hergestellt.

Der innere Siebboden (2) ist gegenüber dem äußeren (1) durch eine gürtelartige Wand (8)vertieft angeordnet und vorzugsweise mittels eines Randprofils einem entsprechenden Profil (L-oder Z Profile 27) des Siebbodens 1 niveaugleich und herausnehmbar aufgesetzt. In Fig 1 ist jedoch eine Ausführungsvariante gewählt, bei der die Bauteile 1, 2 und 3 in einem Stück hergestellt sind. Der Zentralbereich des Muldenbodens 2 ist als flacher, perforierter Streubehälter (3) ausgebildet. Die Muldenböden 1 und 2 weisen ein zum Zentrum flach abfallendes Gefälle auf.

Die gürtelartige Wandzone der inneren Mulde hat steil konische Neigung.

In Fig.2 (Schnitt, zwei Draufsichten unterschiedlicher Ausführung gen von Muldenboden 1 samt Gehäuse und Auffangbehälter) ist der Siebbodeneinsatz 1 in ein Gehäuse (10) mit geschlossener, steil kegeliger, in voller Kantenlänge am Boden stehender Außenwand integriert, indem der Wulst der hochgezogenen Innenwand (4) in die Deckfläche des Gehäuses übergeht. Dem Siebboden (Muldenboden 1 und 2 ist ein Auffangbehälter (6) mit ebenem Boden und dem Gehäuse entsprechendem Umriß untergestellt.

In Fig.3 (Schnitt, Draufsicht von zwei Varianten des Muldenbodens 1) ist die äußere Siebzone (1) mit einer Öffnung und deren Verschluß (11) versehen. Links ein Verschluß in Drahtkonstruktion, rechts in Kunststoff. Der Verschlußdeckel (11) liegt auf Vorsprüngen in der Öffnung des Siebbodens 1 auf und hat nach unten gabelartige Fortsätze (12), sowie einen Griff als obere Arretierung (13).

Mit Hilfe des Gabelfortsatzes (12) wird der Kot durch die Einfüllöffnung auf einen leicht abschüssigen Schulterbereich (16) des Auffangbehälters eingefüllt. Höcker (28) an der Schulterkante verhindern das Abrutschen von Kot, erlauben jedoch das Vorbeiströmen des Urins in den flachen Mittelbereich.

Fig.4 (Schnitt, Draufsicht) : Variante analog zu Fig.2, jedoch mit Einfüllöffnung und Verschluß (11), sowie einem Auffangbehälter mit lateraler Schulter (16).

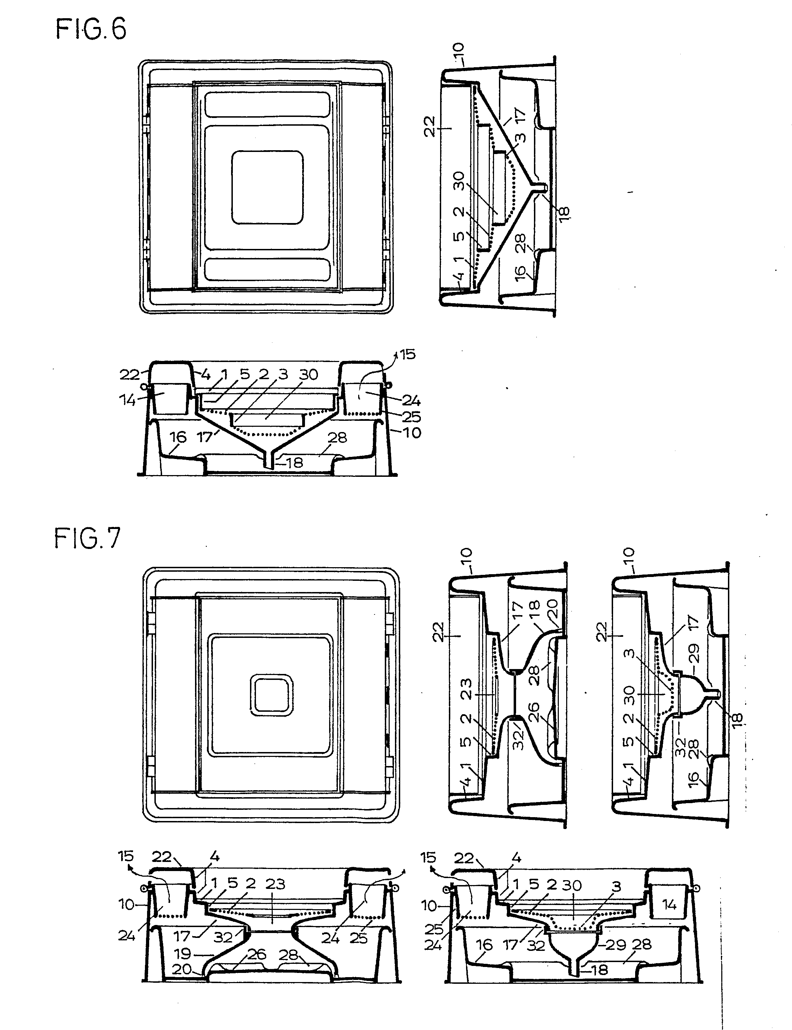

Fig. 5 und Fig.6 veranschaulichen zwei Ausführungsvarianten, bei denen zwei weitere Konstruktionselemente erfindungsgemäß eingeführt sind: Eine Abdeckung gegen aufsteigende Gase (17) und ein Filterbehälter (25), gefüllt mit geruchsneutralisierendem Granulat (24). Die flach trichterförmige Geruchsabdeckung (17) setzt an der Unterkante der Wandzone der äußeren Mulde (4) winkelig an und mündet in eine schräg abgeschnittene Spitze.

In Fig. 5 weist die Deckfläche des Gehäuses Öffnungen auf, in die von unten Geruchsfilterbehälter (25) mit perforiertem Boden eingesetzt und mittels, mit seitlichen Austrittsöffnungen (15) versehenen,Schraubverschlüssen (31) am Gehäuse (10) fixiert werden. Eine Eckfläche der Gehäuseabdeckung und -innenwand ist zu einer Einfüllöffnung (14) tiefgezogen und mit einem Verschlußstöpsel (21), versehen mit Griff (13) und Gabelfortsatz (12), verschlossen. Ein Auffangbehälter mit lateraler Schulterzone(16) ist im Inneren des Gehäuses untergestellt. Der Rand des Muldenbodens 1 liegt mittels Distanzhaltern dem Trichter (17) an der oberen Knickstelle auf und wird von der Wandzone der äußeren Mulde (4) abgestützt.

Fig.6 (Draufsicht, zwei Schnitte) betrifft ein Gehäuse mit integrierter trichterförmiger Geruchsabdeckung (17) und zwei, in der Gehäuseabdeckung symmetrisch angeordneten konischen Vertiefungen, die eine mit offenem Boden als Koteinfüllöffnung (14), die andere mit einem Siebboden versehen, sodaß er einen Behälter (25) zur Aufnahme von geruchsneutralisierendem Granulat (24) bildet. Der obere Rand der Vertiefungen ist so (etwa steil kegelig) ausgebildet, daß ein mit Scharnieren versehener Deckel (22) die Einfüllöffnung (14) luftdicht abschließt. Ein mit seitlich äußeren Gasaustrittsöffnungen (15) versehener, ggf. als Scharrfläche gestalteter Klappdeckel (22) verschließt den Filterbehälter (25). Muldenboden 1 ist in der Variante nach Fig.6 nicht als umlaufender, sondern an zwei Seiten des Muldenbodens 2 symmetrischer Siebboden angeordnet.

Fig.7 (Draufsicht, je zwei Schnitte) demonstriert eine variable Toilette, die im Siebboden 2 statt dem Streugefäß (3) eine zentrale Öffnung aufweist (23), von ausreichender Größe, um den Durchtritt von Kot zu ermöglichen, der auf einem inselartigen, schwach konvexen Mittelteil (26) des Auffangbehälters zu liegen kommt. Urin passiert den Siebboden und rinnt entlang der sich trompetenförmig zu einer Taille verengenden Geruchsabdeckung (17). An der engsten Stelle der Einschnürung setzt mittels Bajonett- oder Schraubprofils eine glockenförmige, im Schnitt S-förmige Geruchsabdeckung (19) an, an welchem der Urin haftend abrinnt. Diese ist der "Kotinsel" (26) des Auffangbehälters lose übergestülpt und am unteren Rand mit Kerben versehen, durch die die Flüssigkeit in die periphere Zone, den Flüssigkeitsbehälter mit ebenem Boden austritt. In der Darstellung ist Muldenboden 1 nicht als Siebboden ausgeführt, indem die Geruchsabdeckung (7) in entsprechender Weise mit flachem Gefälle und einer Abstufung (5) versehen ist, kann aber ggf. mit einem Siebboden ergänzt werden. Siebboden 2 ist seitlich an der Wandzone(5) abgestützt und liegt dem Trichterrand mit Abstandhaltern zur Gewährleistung einer Fuge auf. Die Gehäuseabdeckung weist zwei Vertiefungen auf, die als Geruchsfilterbehälter (25) mit Siebboden, und Klappdeckel (22) mit seitlich äußeren Gasaustrittsöffnungen (15), ausgebildet sind.

Die Variante in Fig.7 weist eine der beiden Vertiefungen der Gehäuseabdeckung als Koteinfüllöffnung(14)mit offenem Boden und dichter Abdeckklappe (22) aus. Siebboden 2 ist zentral mit einer perforierten Streuschale (3) versehen und an der Taille der Geruchsabdeckung (17) setzt mittels Schraub- oder Bajonettverschluß ein Trichter (29) an, dessen abgeschrägte Spitze den flachen Boden eines Auffangbehälters mits lateralen Schultern erreicht.

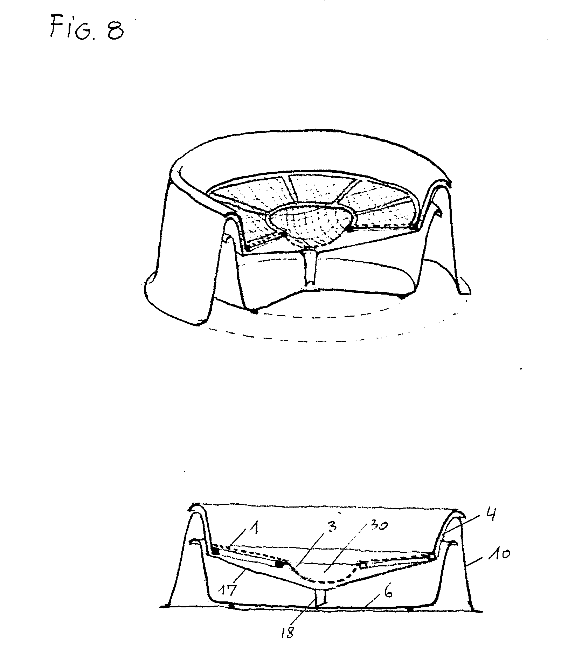

Fig. 8 unterscheidet sich von Fig 2 dadurch, daß bei Fig. 8 die Wandzone (4) sich knickförmig zu einer trichterförmigen Geruchsabdeckung (17) fortsetzt, deren abgeschrägte Spitze (18) in, sich am Auffangbehälterboden (6) ansammelnde Flüssigkeit eintaucht und einen Siphonbildet. Sowie durch einen in einem Stück gefertigtem, mittels einer Tragkonstrucktion verstärktem, rundem Siebboden (1) mit zentraler Streuschale (3), die freitragend an der Knickstelle des Trichters (17) zur Wandzone (4) aufliegen und eine umlaufende Wandzone mit am oberen Rand des Gehäuses (10) aufliegendem Wulst aufweist.

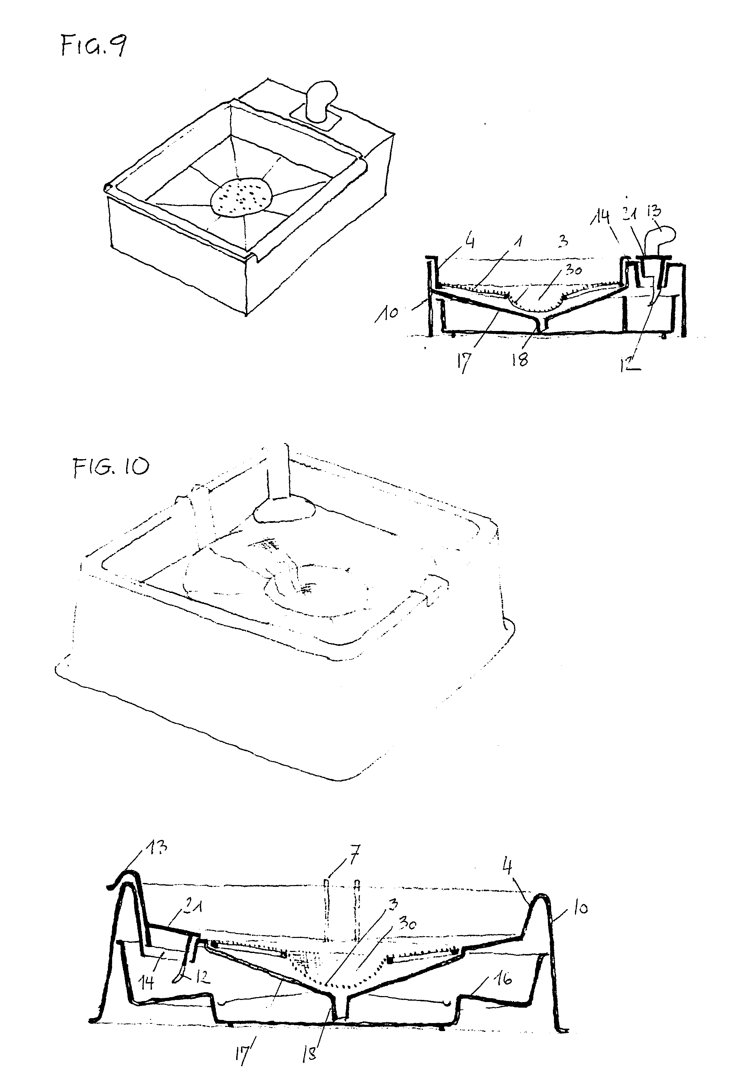

Fig. 9 unterscheidet sich von Fig. 8 durch die rechteckige Gestaltung des Gehäuses (10) mit quadratischem Muldenboden(1) und runder Streuschale (3), sowie durch eine Einfüllöffnung in der Gehäuseabdeckung mit Verschlußstöpsel (12,13,21) sowie einem Auffangbehälter mit getrennten Bereichen für feste und flüssige Stoffe.

Fig. 10 entspricht im wesentlichen Fig. 5 mit dem Unterschied, daß Siebboden(1) und Streuschale (3) rund sind und aus einem Stück Gitter mit Tragkonstruktion bestehen und 2 Henkeln aufweisen sowie eine Einfüllöffnung (14) mit Verschlußstöpsel (12,13,21) in einem der vier Zwickel im quadratischen Muldenboden(1) sowie einem Auffangbehälter (16), dessen Boden an den vier Ecken Schultern mit Außengefälle aufweisen.

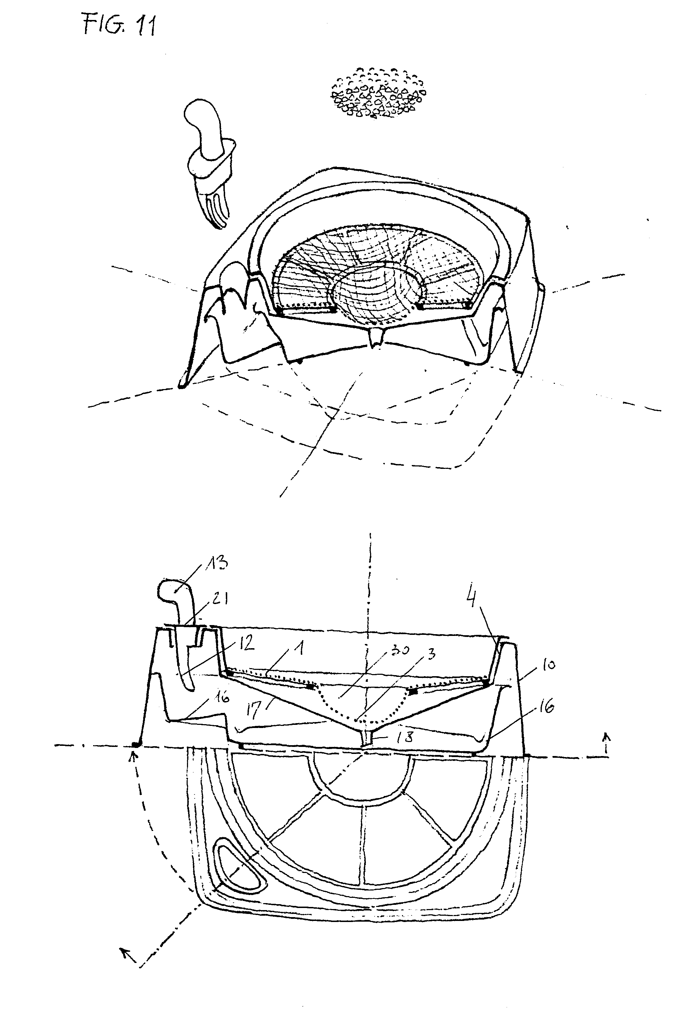

Fig. 11 betrifft ein quadratisches Gehäuse(10) in dem eine runde Mulde analog zu Fig. 8 vertieft angeordnet ist mit herausnehmbarem Siebboden. In einem der Zwickel der Deckfläche ist eine Einfüllöffnung tiefgezogen, die durch einen Stöpsel mit Griff und Gabelfortsatz verschlossen wird und über einer der vier Schulterzonen des Auffangbehälters angeordnet ist.

Zusammenstellung der Bezugsziffern:

1. Bodenzone der äußeren Mulde ( Muldenboden 1, Siebboden 1 )
2. Bodenzone der inneren Mulde ( Muldenboden 2, Siebboden 2 )
3. zentrale perforierte Streuschale ( siehe auch 23 )
4. Wandzone der äußeren Mulde
5. Wandzone der inneren Mulde
6. Auffangbehälter mit ebenem Boden (s.a. 16, 26 )
7. Henkelaufhängung
8. flächige Aufhängung
9. Abstellbeine
10. Gehäuse
11. Verschlußplatte (s.21)
12. Gabelfortsätze
13. Griff des Verschlusses
14. Einfüllöffnung
15. Gasaustrittsöffnungen (s.25)
16. Auffangbehälter mit lateraler Schulter (s.6, 26)
17. trichterförmige Geruchsabdeckung
18. Trichterspitze
19. glockenförmige Geruchsabdeckung als Ansteckelement (s.29)
20. Randkerben
21. Verschlußstöpsel (s. 11)
22. Abdeckklappe
23. zentrale Kotdurchlaßöffnung (s.3)
24. Granulat
25. Geruchsfilterbehälter
26. Auffangbehälter mit zentraler Insel (s.6,16)
27. Z-oder L-Profile
28. Höcker
29. Trichterförmiges Ansteckelement
30. Einstreu
31. Schraubverschluß
32. Steckprofile

## Patentansprüche

1. Toilette für ortsgebundene Tiere, insbesonders tierverhaltensbezogenes Katzenklo, dadurch gekennzeichnet, daß die Abtrittsfläche zwei konzentrische Mulden aufweist, die äußere bestehend aus einer Wandzone (4)mit steiler Außenneigung und einer Bodenzone (1) mit flachem Innengefälle, sowie einer inneren Mulde, bestehend aus reifartiger Wandzone (5), die an Boden 1 anschließt und einer inneren Bodenzone (2) mit flachem Innengefälle, wobei zumindest der innere Muldenboden (2) als Feinsiebboden 2, ggf. auch der äußere als Feinsiebboden 1 ausgebildet ist und die innere Mulde einen zentralen, gesondert ausgebildeten Bereich umfaßt, und den Mulden ein Auffangbehälter (6) untergestellt ist.

2. Toilette nach Anspruch 1, dadurch gekennzeichnet, daß im zentralen Bereich des Siebbodens 2 eine flache, perforierte Schale (3) zur Aufnahme von Einstreu (30) angeordnet ist.

3. Toilette nach Anspruch 1, dadurch gekennzeichnet, daß Muldenboden 1 an seinem Außenrand mittels Henkeln (7), bzw. einer umlaufenden oder zwei gegenüberliegenden Wandflächen (8) mit Randwulst am Rand des Auffangbehälters (4) abgehängt ist und mindestens drei Abstellbeine (9) aufweist.

4. Toilette nach Anspruch 2, gekennzeichnet durch ein, mit den Außenflächen in voller Länge am Boden stehendes und dem Auffangbehälter übergestülptes Gehäuse (10),dessen offene Deckflache innen herabgezogen und als Wandzone(4) der äußeren Mulde ausgebildet ist.

5. Toilette nach Anspruch 2, dadurch gekennzeichnet, daß der Auffangbehälterboden eine oder mehrere Schulterzonen (14) mit Innengefälle und am Steilrand, der zum ebenen Zentralbereich führt, Höcker (28)aufweist bzw mit Außengefälle und Abflußrinne und über der Schulterzone (16) eine Einfüllöffnung mit Verschluß (11) angeordnet ist.

6. Toilette nach Anspruch 5, dadurch gekennzeichnet, daß der Verschluß eine Verschlußplatte (11) oder ein dichter Verschlußstöpsel (21) ist, der unten mit gabelartigen Fortsätzen (12) und oben mit einem Henkel, bzw. Griff (13) versehen ist.

7. Toilette nach Anspruch 3, 4 und 6, dadurch gekennzeichnet, daß eine Einfüllöffnung (14) im äußeren Muldenboden (1) angeordnet ist oder daß ein Teilbereich der Deckfläche des Gehäuses zu einer Einfüllöffnung (14) tiefgezogen ist und daß ein oder mehrere Teilbereiche der Deckfläche des Gehäuses je eine oder mehrere Gasaustrittsöffnungen (16) aufweisen. und die Gasaustrittsöffnung(en) (15) im Gehäuse mit Feinsiebboden versehene, herausnehmbare und mit seitlich offenem Schraubverschluß (31) befestigte oder einen, im Gehäuse integrierten, mit seitlich offener Abdeckklappe versehenen Filterbehälter (25)zur Aufnahme von geruchsneutralisierendem Granulat (24) aufweisen.

8. Toilette nach Anspruch 7, dadurch gekennzeichnet, daß die Wandzone (4) der äußeren Mulde einen Knick aufweist, an dem sich eine flach trichterförmige Geruchsabdeckung (17) zentripetal fortsetzt, wobei der Rand des, als Siebboden 1 ausgebildeten, Muldenbodens 1 an der Knickstelle mittels Distanzhaltern auf der Geruchsabdeckung (17) aufgelegt ist und sich an der Muldenwand (4) abstützt.

9. Toilette nach Anspruch 8, dadurch gekennzeichnet, daß die trichterförmige Geruchsabdeckung ein Trichter ist, dessen Schnabel eine schräge Spitze(18) aufweist, die den flachen Boden eines Auffangbehälters mit lateraler Schulter (16) erreicht und über dem ein Siebboden 2 mit Streuschale (3) angeordnet ist, oder sich zu einer im Schnitt S-förmige, glockenartigen Geruchsabdeckung (19) verbreitert, deren mit Einkerbungen (20) zum Durchlaß von Flüssigkeit versehener Rand lose über den konvex inselförmigen (26), mit Höckern (28) am Steilrand zum flachen Auffangbehälteraußenbereich ausgestatteter Zentralbereich gestülpt ist und über dem ein Siebboden 2 mit mehreren oder einer zentralen Kotdurchlaßöffnung (23) angeordnet ist.

10. Toilette nach Anspruch 9, dadurch gekennzeichnet, daß als Ersatz eines äußeren Siebbodens 1 die Geruchsabdeckung in der Funktion des Muldenbodens 1 die Wandzone (4) mittels Knick zentripetal mit flachem Gefälle fortsetzt und in eine, der inneren Wandzone (5) entsprechenden Stufe herabgezogen ist, an deren Innenknick der Rand des Siebbodens 2 mittels Distanzhaltern aufgelegt und an der Wandzone (5) abgestützt und die Geruchsabdeckung (17) sich mit flachem Innengefälle zu einem Trichter oder einer Taille fortsetzt.

11. Toilette nach Anspruch 1, gekennzeichnet durch einen Bodenablauf im Auffangbehälter zur permanenten Drainage des Urins und ggf. zum Ausspülen des Kots.

0259293

FIG. 1

FIG. 2

0259293

FIG.3

FIG.4

FIG.5

0259293

FIG.6

FIG.7

0259293

FIG. 8

0259293

FIG. 9

FIG. 10

FIG. 11